Europäisches Patentamt

European Patent Office

Office européen des brevets

(19)

(11) Veröffentlichungsnummer: **0 208 018**
**A1**

(12) **EUROPÄISCHE PATENTANMELDUNG**

(21) Anmeldenummer: 85115503.6

(22) Anmeldetag: 06.12.85

(51) Int. Cl.⁴: **F 16 D 13/64**
F 16 D 69/00

(30) Priorität: 03.07.85 DE 3523768

(43) Veröffentlichungstag der Anmeldung:
14.01.87 Patentblatt 87/3

(84) Benannte Vertragsstaaten:
AT BE CH DE FR GB IT LI NL SE

(71) Anmelder: H.K. Porter Company (Nederland) N.V.
Industriestraat 32 - 7891 GV Postbus 1
NL-7890 Klazienaveen(NL)

(72) Erfinder: Müller, Ulrich
Wacholderweg 21
D-4473 Haseluenne(DE)

(74) Vertreter: Gudel, Diether, Dr. et al,
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Grosse Eschenheimer Strasse 39
D-6000 Frankfurt am Main 1(DE)

(54) Mitnehmerscheibe einer Kupplung mit asbestfreien Kupplungsbelägen.

(57) Beschrieben wird ein asbestfreier Kupplungsbelag eines Kraftfahrzeuges in Form einer Ringscheibe, wobei in der Reibfläche der Ringscheibe mehrere Nutenpaare (2, 3) ausgebildet sind, die sich an dem Verlauf der höchsten Federkissenkröpfung der zugehörigen Mitnehmerscheibe der Kupplung befinden. Dadurch wird der Kupplungsbelag an den anfänglich tragenden Stellen weicher und flexibler gestaltet.

Fig. 1

EP 0 208 018 A1

## Beschreibung

Die Erfindung betrifft eine Mitnehmerscheibe einer Kraftfahrzeug-Kupplung mit asbestfreien Kupplungsbelägen mit einem mittig angeordneten Mitnehmerblech, an dem beidseits die als Ringscheiben ausgebildeten Kupplungsbeläge aus asbestfreiem Material befestigt sind, wobei am Mitnehmerblech über dessen Umfang verteilt und zwischen den Ringscheiben der Kupplungsbeläge in Umfangsrichtung voneinander beabstandete Federkissen ausgebildet sind.

Asbestfreie Kupplungsbeläge für derartige Mitnehmerscheiben sind beispielsweise beschrieben in der deutschen Patentschrift 28 04 327.

Asbestfreie Kupplungsbeläge sind sehr verschleißfest. Dies bedingt eine relativ lange Einlaufphase für den Belag. Durch die gegebene Konstruktion der zugehörigen Mitnehmerscheibe der Kupplung ergibt sich dann ein Tragbild, das durch sogenannte tragende und nicht tragende Stellen gekennzeichnet ist. Die Anordnung dieser Stellen ist gleichmäßig. Durch sie wird die Kupplungsscheibe während des Einkuppelvorganges zu Reibschwingungen angeregt. In Fahrzeugen mit einem in dieser Hinsicht kritischen Antriebssystem kann es daher zu unerwünschten, gegebenenfalls starken Beeinträchtigungen des Komforts im Einkuppelverhalten kommen.

Die Erfindung mindert bzw. vermeidet diese Nachteile. Ihr liegt die Aufgabe zugrunde, einen asbestfreien Kupplungsbelag vorzuschlagen, bei dem die erwähnten Beeinträchtigungen im Komfort beim Einkuppeln, auch bei in dieser Hinsicht kritischen Antriebssystemen, praktisch nicht mehr auftreten.

Zur Lösung dieser Aufgabe ist die Erfindung dadurch gekennzeichnet, daß in der Reibfläche wenigstens eines Kupplungsbelags jeweils an den Stellen der höchsten Federkissenkröpfung Nuten ausgebildet sind.

Diese Nuten befinden sich an dem Verlauf der höchsten Federkissenkröpfung der zugehörigen Mitnehmerscheibe der mit dem erfindungsgemäßen, asbestfreien Kupplungsbelägen ausgerüsteten Kraftfahrzeugkupplung. Durch die Nuten wird der Kupplungsbelag an den betreffenden Stellen, die anfänglich also tragen, weicher und flexibler ausgestaltet. Außerdem kann das Material des Kupplungsbelags bei Beanspruchungen (Einkuppeln) in die Nuten wandern. Die Breite der Nuten braucht daher nicht genau der Breite der Federkissenkröpfungen zu entsprechen. Die erwähnten Beeinträchtigungen im Komfort beim Einkuppeln können also nicht mehr auftreten.

Die Nuten erstrecken sich im wesentlichen durchgehend entsprechend dem Verlauf der Federkissenkröpfungen. Sie befinden sich - in axialer Richtung der Mitnehmerscheibe gesehen - über den Stellen der höchsten Federkissenkröpfung des zugehörigen Mitnehmerblechs. Da diese Federkissenkröpfungen üblicherweise paarweise angeordnet sind, trifft dies auch für die Nuten zu.

Die Nuten können vom Innenrand der Ringscheibe zum Außenrand durchgehen. Aus Gründen der Schleuderfestigkeit können die Nuten aber auch verkürzt bzw. unterbrochen sein. Sie enden dann vor der Innenkante und/oder Außenkante der

Ringscheibe, hier wiederum bevorzugt vor der Innenkante, um ein Reißen der Ringscheibe bei erhöhter Beanspruchung zu vermeiden.

Die Federkissenkröpfungen sind Stand der Technik. Sie werden beispielsweise dadurch ausgebildet, daß an einer Mittelscheibe des Mitnehmerblechs von der Mittelscheibe sternförmig abgehende und jeweils paarweise übereinander gelegte Bleche befestigt sind, die sich beiseits verbreitern. Im Bereich dieser Verbreiterungen sind die Bleche aus ihrer Ebene derart herausgebogen, daß sie zwischen sich die in axialer Richtung federnden Federkissen ausbilden. Dies sind die erwähnten Federkissenkröpfungen. Statt dessen können die Federkissenkröpfungen auch durch ein einziges, entsprechend gebogenes Blech ausgebildet sein. Sie erhöhen den Einkupplungskomfort.

Die Nuten sind in der Reibfläche wenigstens einer der Ringscheiben, vorzugsweise beider Ringscheiben ausgebildet.

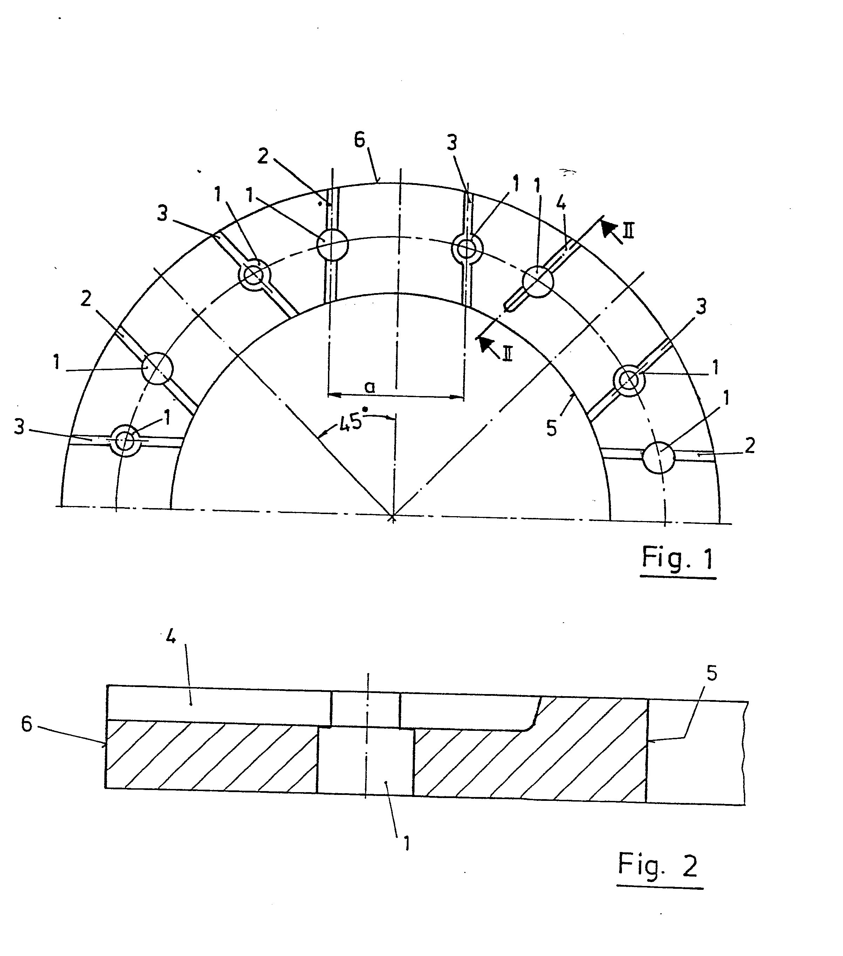

Die Erfindung wird im folgenden anhand eines Ausführungsbeispiels näher erläutert, aus dem sich weitere wichtige Merkmale ergeben. Figur 1 zeigt eine Ansicht eines Hälfte eines erfindungsgemäßen, asbestfreien Kupplungsbelags und Fig. 2 einen Schnitt längs II-II von Fig. 1 in vergrößertem Maßstab.

Der Kupplungsbelag ist als Ringscheibe ausgebildet, in der paarweise Niet- und Durchgangsbohrungen angebracht sind, die sich in axialer Richtung der Ringscheibe erstrecken.

Erfindungsgemäß sind in der in der Zeichnung sichtbaren Reibfläche der Ringscheibe zueinander parallel angeordnete, beabstandete Nuten 2, 3 vorgesehen, die in der Reibfläche der Ringscheibe vom äußeren zum inneren Rand durchgehen können. Sie sind paarweise angeordnet. Die Nuten eines Nutenpaares haben voneinander einen Abstand a von beispielsweise 45 mm. Ihre Breite liegt bei 2,4 mm. Sie sind ca. 1 mm tief. Erfindungsgemäß sind sie an dem Verlauf der höchsten Federkissenkröpfung der zugehörigen Mitnehmerscheibe angebracht, die sich also direkt unter der gezeigten Ringscheibe befindet.

Fig. 1 zeigt außerdem, daß die Nuten 2, 3 alternierend jeweils eine der Bohrungen 1 durchlaufen.

Bei den vorstehend erwähnten, beispielsweisen Maßangaben für die Nuten 2, 3 wurde angenommen, daß die Ringscheibe eine Dicke von etwa 3,7 mm hat sowie einen zu den Zentren der Bohrungen gemessenen Durchmesser von etwa 180 mm. Es sei erwähnt, daß die Bohrungen 1 in radialer Richtung gesehen sich etwa in der Mitte der Ringscheibe befinden.

Aus Fig. 1 und 2 geht hervor, daß zur Erhöhung der Schleuderfestigkeit eine Nut 4 vor der Innenkante 5 der Ringscheibe endet, und zwar in einem Radius auslaufend. Die Nuten können auch vor der Außenkante 6, ggfs. vor beiden Kanten 5, 6, enden.

## Patent- und Schutzansprüche

1. Mitnehmerscheibe einer Kraftfahrzeug-Kupplung mit asbestfreien Kupplungsbelägen mit einem mittig angeordneten Mitnehmerblech, an dem beidseits die als Ringscheiben ausgebildeten Kupplungsbeläge aus asbestfreiem Material befestigt sind, wobei am Mitnehmerblech über dessen Umfang verteilt und zwischen den Ringscheiben der Kupplungsbeläge in Umfangsrichtung voneinander beabstandete Federkissen ausgebildet sind,

   d a d u r c h   g e k e n n z e i c h n e t ,

   daß in der Reibfläche wenigstens eines Kupplungsbelags jeweils an den Stellen der höchsten Federkissenkröpfung Nuten (2, 3, 4) ausgebildet sind.

2. Mitnehmerscheibe nach Anspruch 1,

   d a d u r c h   g e k e n n z e i c h n e t ,

   daß die Nuten (4) vor der Innenkante (5) und/oder Außenkante (6) der Ringscheibe enden.

3. Aus asbestfreiem Material hergestellter Kupplungsbelag in Form einer Ringscheibe, versehen mit Nuten (2, 3, 4) nach Patentanspruch 1 oder 2.

Der Patentanwalt:

Dr. D. Gudel

0208018

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 498 813 (DON INTERNATIONAL) * gesamte Dokument * | 1-3 | F 16 D 13/64 F 16 D 69/00 |
| A | US-A-3 068 131 (H.C. MORTON) * Spalte 2, Zeile 61 - Spalte 3, Zeile 4; Figuren 1, 2 * | 1 | |
| A | FR-A-1 132 609 (S.A. FRANCAISE DU FERODO) * Seite 3, linke Spalte, Zeile 10 - rechte Spalte, Zeile 28; Figuren 7-12 * | 1,2 | |
| A | DE-B-1 250 209 (WAGNER ELECTRIC) * Ansprüche 1, 2, 5; Spalte 4, Zeilen 3-18; Figur 4 * | 1 | |
| A | US-A-1 804 905 (E.E. WEMP) * das ganze Dokument * | 1 | |

| RECHERCHIERTE SACHGEBIETE (Int. Cl 4) |
|---|
| F 16 D 13/00 F 16 D 69/00 |

Der vorliegende Recherchenbericht wurde für alle Patentansprüche erstellt.

| Recherchenort | Abschlußdatum der Recherche | Prüfer |
|---|---|---|
| BERLIN | 29-09-1986 | LEMBLE Y.A.F.M. |